# EUROPÄISCHE PATENTSCHRIFT

(11) **EP 0 556 637 B1**
(45) Veröffentlichungstag und Bekanntmachung des Hinweises auf die Patenterteilung: **27.12.1995**
(21) Anmeldenummer: 93101626.5
(22) Anmeldetag: 03.02.1993
(51) Int. Cl.: C08J 5/24, C08J 5/18, B29C 43/36

(54) **Verfahren zur Herstellung von Formteilen**
Process for preparing moulded articles
Procédé pour préparer des articles formés

(30) Priorität: 17.02.1992 DE 4204685
(43) Veröffentlichungstag der Anmeldung: 25.08.1993
(73) Patentinhaber: BASF Aktiengesellschaft, 67063 Ludwigshafen (DE)
(72) Erfinder: Goetz, Walter, Dr., W-6700 Ludwigshafen (DE); Weiss, Hans-Peter, Dr., W-6704 Mutterstadt (DE)

(56) Entgegenhaltungen:
- EP-A- 0 034 757
- GB-A- 2 124 130

## Beschreibung

Die Erfindung betrifft ein Verfahren zur Herstellung von Formteilen durch Aushärten von Prepreglaminaten aus faserverstärkten Reaktionsharzen nach dem Autoklavenverfahren unter Verwendung von speziellen Abdeckfolien.

Prepregs aus faserverstärkten Reaktionsharzen werden üblicherweise nach dem Autoklavenverfahren (vacuum-bagging) zu Faserverbundwerkstoffen gehärtet. Dazu wird das von Trennfolien umhüllte Prepreglaminat aus einer Unterlage abgelegt und mit einer gasundurchlässigen Polyamidfolie abgedeckt, der Gasraum zwischen Unterlage und Abdeckfolie wird zur Entfernung von Lufteinschlüssen evakuiert und die ganze Anordnung wird in einem Autoklaven erhöhtem Druck und erhöhter Temperatur ausgesetzt, wobei das Reaktionsharz aushärtet.

Als Abdeckfolien verwendet man gewöhnlich wie aus der GB-A 21 24 130 bekannt, solche aus Polyamid 6 oder Polyamid 66. Polyamid 6 kann wegen seiner verhältnismäßig niedrigen Erweichungstemperatur nur bei solchen Reaktionsharzen eingesetzt werden, deren Härtungstemperatur unterhalb von 200°C liegt. Aufgrund des Gehalts an flüchtigen Bestandteilen, die bei den hohen Härtungstemperaturen und langen Härtungszeiten aus Polyamid 6 - Folien verdampfen, bilden sich Ablagerungen an der Innenwand des Autoklaven, die eine häufige Reinigung notwendig machen.

Folien aus Polyamid 66/6 oder aus PA-66/6T (s. EP-A 34 757) haben den Nachteil, daß sie wenig flexibel sind, so daß die Kanten des Prepreglaminats abgerundet werden, bzw. im Fall von aufgelegten Abdeckplatten an den Kanten Folienbrüche erfolgen können.

Der Erfindung lag daher die Aufgabe zugrunde, die geschilderten Nachteile zu vermeiden.

Diese Aufgabe wird erfindungsgemäß durch Verwendung von Abdeckfolien aus einem Copolyamid gelöst, welches aus 70 bis 97 Gew.-% Polyamid 66 - Bausteinen und 30 bis 3 Gew.-% Polyamid 6 - Bausteinen besteht.

Copolyamide 66/6 sind an sich bekannt. Sie werden durch gemeinsame Polykondensation von Adipinsäure, Hexamethylendiamin und Caprolactam hergestellt. Die erfindungsgemäß eingesetzten Copolyamide enthalten 3 bis 30, vorzugsweise 5 bis 20 und insbesondere 8 bis 15 Gew.-% Caprolactam-Einheiten. Sie können mit üblichen Cu(I)-Verbindungen, bevorzugt Cu(I)/KJ-Komplexen wärmestabilisiert sein, wobei der Cu-Gehalt vorzugsweise 30 bis 1000 ppm beträgt. Die Herstellung von Folien aus diesem Copolyamid kann nach üblichen Verfahren erfolgen, z.B. durch Extrusion aus einer Breitschlitzdüse auf eine Kühlwalze, wie es in EP-B 34 757 beschrieben ist. Die Foliendicke beträgt vorzugsweise 25 bis 300, insbesondere 40 bis 100 »m. Die Folien können die üblichen Verarbeitungshilfsmittel enthalten.

Das erfindungsgemäße Verfahren eignet sich zur Härtung von Prepregs aus üblichen faserverstärkten Reaktionsharzen, z.B. solchen auf Basis von Epoxidharzen, Bismaleinimidharzen, Vinylesterharzen oder ungesättigten Polyesterharzen. Die Harze enthalten die jeweils üblichen Härter sowie Verstärkungsfasern, vorzugsweise in Mengen von 30-80 Gew.-%, wobei vorzugsweise Endlosfasern eingesetzt werden, die im Prepreg in einer oder mehreren Vorzugsrichtungen orientiert sind. Ferner können die Prepregs die üblichen Zusatzstoffe, wie Thermoplaste, Kautschuke, Pigmente oder Flammschutzmittel enthalten.

Zur Herstellung der Faserverbundwerkstoffe werden mehrere Lagen von Prepregs, im allgemeinen zwischen 4 und 10 Lagen, zu einem Laminat übereinanderdrapiert, wobei die Verstärkungsfasern in verschiedenen Richtungen orientiert sein können. Die Laminatdicke beträgt gewöhnlich 0,3 bis 10 cm.

Das Laminat wird beidseitig von Trennfolien umhüllt, die ein Ablösen des gehärteten Faserverbundwerkstoffs ermöglichen sollen. Gut geeignet dafür sind z.B. Teflonfolien. Das Prepreglaminat wird dann auf einer Unterlage, zweckmäßigerweise einer Metallplatte, abgelegt. In manchen Fällen ist es zweckmäßig, zur Erzeugung gleichmäßig dicker Formteile auf das Laminat eine weitere Abdeckplatte, zweckmäßigerweise aus Metall, zu legen. Darauf kann dann eine gasdurchlässige Glasfasermatte gelegt werden. Schließlich wird mit der erfindungsgemäßen Polyamidfolie gasdicht abgedeckt.

Der Gasraum zwischen Unterlage und Abdeckfolie wird evakuiert, um Lufteinschlüsse zu entfernen und dadurch die Bildung von Lunkern im Formteil zu vermeiden. In den meisten Fällen genügt eine Druckreduzierung auf weniger als 1.10⁴ Pa (100 mbar), bevorzugt ist ein Druck von weniger als 5.10³ Pa (50 mbar). Die ganze Anordnung wird dazu in einem Autoklaven erhöhtem Druck ausgesetzt. Die optimale Härtungstemperatur ist von Harz zu Harz verschieden, sie liegt im allgemeinen zwischen 120 und 250°C, vorzugsweise zwischen 150 und 220°C; die Dauer liegt im Bereich von 2 bis 5 Stunden. Nach beendeter Härtung wird die Anordnung aus dem Autoklaven entnommen und die Trennfolien werden vom ausgehärteten Formteil abgezogen.

### Beispiele

### Eingesetzte Polyamide

A. Copolyamid 66/6 mit 10 Gew.-% Caprolactam, Ultramid® KR 4603 der BASF AG (erfindungsgemäß)
B. Polyamid 6, Ultramid B4
C. Polyamid 66, Ultramid A4
D. Copolyamid 66/6 mit 50 Gew.-% Caprolactam, Ultramid 5A

### Folienherstellung

Zur Folienherstellung wurde eine DEMAG Flachfolienanlage mit 90 mm - Extruder (L:D = 25), Breitschlitzdüse und Metallkühl- und temperierwalzen verwendet. Die Massetemperatur betrug 275°C, der Massedruck 1,8 10⁷ Pa (180 bar) und die Schneckendrehzahl 50 min⁻¹. Die Kühlwalzentemperatur lag bei 95°C. Als Werkzeug wurde eine Breitschlitzdüse (Flexlip) mit 800 mm Breite und 0,5 mm Spaltweite verwendet.

Damit wurden aus den angegebenen Polyamiden bei einer Abzugsgeschwindigkeit von 40 m/min Flachfolien mit 680 mm Breite und 50 »m Dicke hergestellt.

An den erhaltenen Folien wurde der Gehalt an flüchtigen Anteilen durch Thermogravimetrie (TGA) als Gewichtsverlust in % bei 200°C/20 l/h Luft/1 h bestimmt.

### Prepregherstellung

X. Aus dem Epoxidharz Rigidite® 5208 der BASF (Epoxid Araldite MY 720 von CIBA-GEIGY mit Härter Diaminodiphenylsulfon) wurde auf einer Beschichtungsmaschine ein Harzfilm auf einem Trennpapier hergestellt, der auf einer Prepregmaschine nach den Harzfilmtransferverfahren mit parallelisierten Glasfaser-Rovings zu einem unidirektionalen Prepreg verarbeitet wurde. Der Glasgehalt betrug 60 Gew.-%.
Y. Nach den gleichen Verfahren wurde ein Prepreg aus dem Bismaleinimidharz Rigidite 5250 (Bismaleinimid mit Härter Diallyl-Bisphenol A) und unidirektionalen Glasfasern hergestellt.

### Prepreg-Härtung

Mit einem Testwerkzeug wurden rechteckige Schalen mit den Maßen 300 x 200 x 40 mm (Seitenwände Neigung 70°) und einer Wandstärke von 2,5 mm hergestellt. Jeweils 30 Prepregs X bzw. Y wurden zu Laminaten aufeinanderdrapiert, in Teflon-Trennfolien eingehüllt, auf einer Aluminiumplatte abgelegt und mit den Folien A bis D abgedeckt und evakuiert (< 50 mbar).

Die Härtung erfolgte in einem Autoklaven bei 180°C (Epoxidharz) bzw. 225°C (BMI-Harz). Der Druck betrug 1.10⁶ Pa (10 bar) N₂, die Härtungszeit 2 Stunden.

Die Oberfläche (Kanten) der erhaltenen Formteile wurden visuell beurteilt.

### Ergebnisse

| Beispiel | Prepreg | Folie | TGA-Verlust | visuelle Beurteilung |
|---|---|---|---|---|
| 1 | X | A | 0,7 % | einwandfrei |
| 2 | X | B | 3,0 % | einwandfrei |
| 3 | X | C | 0,5 % | abgerundete Kanten |
| 4 | X | D | 4,0 % | einwandfrei |
| 5 | Y | A | 0,7 % | einwandfrei |
| 6 | Y | B | 3,0 % | Folie erweicht |
| 7 | Y | C | 0,5 % | abgerundete Kanten |
| 8 | Y | D | 4,0 % | einwandfrei |
| Die Beispiele 1 und 5 sind erfindungsgemäß. | | | | |

## Patentansprüche

1. Verfahren zur Herstellung von Formteilen durch thermisches Aushärten von Prepregs aus faserverstärkten Reaktionsharzen, wobei man von Trennfolien umhüllte Prepreglaminate auf einer Unterlage ablegt und mit einer gasundurchlässigen Polyamidfolie abdeckt, den Gasraum zwischen Unterlage und Abdeckfolie evakuiert und die Anordnung in einem Autoklaven erhöhter Temperatur aussetzt, dadurch gekennzeichnet, daß die Polyamidfolie aus einem Copolyamid mit 70 bis 97 Gew.-% Polyamid 66-Bausteinen und 30 bis 3 Gew.-% Polyamid 6-Bausteinen besteht.

## Claims

1. A process for producing shaped articles by thermal curing of prepregs of fiber reinforced laminating resins by laying prepreg laminates wrapped in release films onto a support surface, covering with a gas impermeable polyamide film, evacuating the space between the support surface and the cover film and exposing the assembly to an elevated temperature in an autoclave, characterized in that the polyamide film comprises a copolyamide containing from 70 to 97% by weight of nylon 66 units and from 30 to 3% by weight of nylon 6 units.

## Revendications

1. Procédé de fabrication de pièces moulées par durcissement thermique de feuilles préimprégnées en résines composites renforcées de fibres, dans lequel on dépose des stratifiés de feuilles préimprégnées, enrobés de feuilles de séparation, sur un support et on les recouvre d'une feuille de polyamide imperméable aux gaz, on fait le vide dans l'espace entre le support et la feuille de recouvrement et on expose le tout à une température élevée dans un autoclave, caractérisé en ce que la feuille de polyamide est faite d'un copolyamide composé de 70 à 97% en poids de motifs polyamide 66 et de 30 à 3% en poids de motifs polyamide 6.
